# EUROPÄISCHE PATENTSCHRIFT

(11) **EP 2 477 943 B1**
(45) Veröffentlichungstag und Bekanntmachung des Hinweises auf die Patenterteilung: **17.01.2018**
(21) Anmeldenummer: 10760959.6
(22) Anmeldetag: 16.09.2010
(51) Int. Cl.: B82Y 30/00, B82Y 40/00, C01B 32/15, C01B 32/174

(54) **Verfahren zur Seitenwandfunktionalisierung von mehrwandigen Kohlenstoff-Nanoröhren**
Method for sidewall functionalization of multi-wall carbon nanotubes
Méthode de fonctionnalisation des parois latérales de nanotubes de carbone à parois multiples

(30) Priorität: 17.09.2009 DE 102009041944
(43) Veröffentlichungstag der Anmeldung: 25.07.2012
(73) Patentinhaber: Future Carbon GmbH, 95448 Bayreuth (DE)
(72) Erfinder: HELBIG, Jens, 90403 Nürnberg (DE); ZENKEL, Christian, 95494 Gesees (DE)
(74) Vertreter: Müller, Christian Stefan Gerd
(86) Internationale Anmeldenummer: PCT/EP2010/063642
(87) Internationale Veröffentlichungsnummer: WO 2011/033037

(56) Entgegenhaltungen:
- WO-A2-02/060812
- WO-A2-2005/012172
- US-A1- 2004 071 624
- US-A1- 2005 255 030
- US-A1- 2006 171 874
- J. GE, D. ZHANG, Q. LI, H. HOU, M. GRAHAM, L. DAI, F. HARRIS, S. CHENG: "Multiwalled Carbon Nanotubes with Chemically Grafted Polyetherimides", JOURNAL OF THE AMERICAN CHEMICAL SOCIETY, Bd. 127, Nr. 28, 22. Juni 2005 (2005-06-22), Seiten 9984-9985, XP002619966,

## Beschreibung

Die vorliegende Erfindung betrifft ein Verfahren zum Herstellen von seitenwandfunktionalisierten, mehrwandigen Kohlenstoff-Nanoröhren mittels Diazotierung. Insbesondere betrifft die vorliegende Erfindung eine kovalente Seitenwandfunktionalisierung von mehrwandigen Kohlenstoff-Nanoröhren (Carbon-Nanotubes - CNT).

Für eine bessere Benetzung von CNT und einer möglichen kovalenten Vernetzung von CNT-Oberflächen mit einer sie umgebenden reaktiven Matrix zur Steigerung von mechanischen Eigenschaften ist es notwendig, die Oberflächen von CNT chemisch zu modifizieren.

Dadurch werden für eine Vielzahl von Anwendungen verbesserte Materialien auf Basis von vernetzenden und thermoplastischen Kunststoffen möglich, wie beispielsweise Faserverbundbauteile mit verbesserter interlaminarer Scherfestigkeit, Elastomere mit erhöhtem E-Modul, stark vernetzte Harze mit gesteigerter Zähigkeit, mechanisch verstärkte Polyamide und dergleichen.

Des Weiteren lassen sich mit an der Oberfläche modifizierten CNT auch verbesserte Dispersionen auf wässriger oder organischer Lösemittelbasis herstellen, die dann als Vorstufen für Beschichtungen, als Additive in Polymeren, Metallen oder Keramiken eingesetzt werden können.

Die Modifizierung von CNT-Oberflächen kann prinzipiell auf verschiedene, aus dem Stand der Technik allgemein bekannte Arten stattfinden, wie:
- Einsatz von sogenannten Surfactants, hauptsächlich Tenside, die über Van der Waals Wechselwirkungen an die Oberfläche der CNT gebunden sind;
- durch über eine π-π- Wechselwirkung an die Oberfläche koordinierte polyaromatische Verbindungen;
- durch Aufwachsen von Polymeren an der Oberfläche der CNT über "grafting from" Methoden;
- durch Abscheiden von metallischen oder metalloxidischen Partikeln oder Filmen an der CNT-Oberfläche;
- durch Oxidation der CNT-Oberfläche mit oxidierenden Säuren und weitere Funktionalisierung der entstehenden Carboxylgruppen;
- durch Aufbringen von Molekülen niedrigen Molekulargewichts mit einer spezifischen Endgruppe über Reaktionen, die zu einer kovalenten Anbindung an die CNT-Oberfläche führen.

Vor allem die letztgenannte Methode ist für die Anwendung von CNTs als Verstärkungsmaterial in Polymeren von besonderem Interesse, da hier die stärkste Verbindung zwischen polymerer Matrix und dem CNT-Füllstoffpartikel gewährleistet werden kann. Nur durch eine solche starke Anbindung ist es möglich, die aus der Verbundmateriallehre bekannten Verstärkungsmechanismen, beispielsweise Kraftübertrag auf die eingebetteten Partikel, zu erreichen. Des Weiteren wird die besondere Struktur der CNT nicht übermäßig stark angegriffen, wie es bei einer Oxidation der Oberfläche der Fall ist, wodurch sowohl die mechanischen, als auch die elektronischen Eigenschaften weitgehend erhalten bleiben.

Die so funktionalisierten CNT können problemlos über bekannte Methoden weiter derivatisiert und funktionalisiert werden und sind so für eine Vielzahl von Anwendungen, zum Beispiel in Harzen, geeignet. So können beispielsweise kovalente Vernetzungen von CNT mit Polymermatrizes und somit eine Verbesserung der mechanischen und elektronischen Eigenschaften von Harzen und an anderen Polymeren erreicht werden.

Die Modifikation von CNT mit kovalent angebundenen Molekülen wird schon seit einigen Jahren auf verschiedenen Wegen untersucht und wird für bestimmte Funktionalitäten auch bereits kommerziell eingesetzt.

Dabei muss zuerst zwischen der Funktionalisierung von einwandigen Kohlenstoff-Nanoröhren (Singlewall-Nanotubes (SWCNT)) und mehrwandigen Kohlenstoff-Nanoröhren (Multiwall-Nanotubes (MWCNT)) unterschieden werden. Denn es ergeben sich fundamentale Unterschiede in der Art der Reaktionsmechanismen, die derzeit an SWCNT beziehungsweise MWCNT eingesetzt werden können.

Eine direkte Seitenwandfunktionalisierung ist derzeit nur an SWCNT zweifelsfrei nachgewiesen. Dies wird mit einer stärkeren Reaktivität der SWCNT aufgrund stärkerer Krümmung der Oberfläche erklärt und somit auch mit einer stärkeren Pyramidalisierung des π-Systems.

Eine Oxidierung mit den bisherigen Methoden, wie beispielsweise mit HNO₃, ist nur an MWCNT ohne eine gravierende Störung der Eigenschaften von CNT möglich. Eine Oxidierung von SWCNT durch oxidierende Säuren oder Gase, ohne die SWCNT stark zu schädigen oder vollständig zu zerstören, ist derzeit nicht möglich.

Derzeit sind in der Literatur die meisten Arbeiten zur kovalenten Funktionalisierung von CNT an SWCNT beschrieben. Die Gründe hierzu sind nicht allgemein bekannt, doch wird angenommen, dass die starke Krümmung der Oberfläche und die daraus resultierende starke Pyramidalisierung des π-Systems der SWCNT diese besonders reaktiv macht und so eine chemische Reaktion der π-Bindungen der aromatischen Ringe erst ermöglicht.

In der US 2005/0255030 wird ein Verfahren zur Funktionalisierung von CNT beschrieben, wobei SWCNT mit Aminen und Nitriten umgesetzt werden. Die US 2006/0171874 offenbart ein Verfahren zur Herstellung von funktionalisierten SWCNT, wobei SWCNT zuerst fluoriert und anschließend mit einer Aminverbindung umgesetzt werden, wodurch SWCNT bereitgestellt werden, die über kovalente Kohlenstoff-Stickstoff-Bindungen an ihren Seitenwänden funktionalisiert sind.

Die an SWCNT beschriebenen Reaktionen sind für MWCNT für eine direkte Seitenwandfunktionalisierung bisher nicht zweifelsfrei nachgewiesen.

In neueren Studien wurde gezeigt, dass der Krümmungsradius einen Einfluss auf die Reaktion hat und die Reaktivität und somit die Möglichkeit einer kovalenten Seitenwandfunktionalisierung von SWCNT und MWCNT aufgrund dessen stark unterschiedlich ist. Insbesondere ist der Krümmungsradius bei SWCNT deutlich geringer als bei MWCNT. Daher sind die bisher beschriebenen Reaktionen, welche an SWCNT nachgewiesen wurden, unter den gegebenen, unangepassten Bedingungen nicht für MWCNT, aufgrund deren deutlich niedrigeren Reaktivität, welche eben auf den kleineren Krümmungsradius der äußeren Röhrendwand zurück zu führen ist, anwendbar.

Deswegen wird für MWCNT bisher üblicherweise ein mehrstufiger Weg zur Funktionalisierung vorgenommen. Zuerst wird die Oberfläche der MWCNT oxidiert, meistens mittels konzentrierter Salpetersäure. Bei diesem Vorgang wird allerdings das π- und α-Bindungssystem der Graphenschichten angegriffen und dadurch empfindlich gestört, was eine deutliche Verschlechterung der mechanischen Eigenschaften und der chemischen Stabilität der MWCNT sowie eine Schädigung selbiger zur Folge hat. Diese Schädigung wirkt sich auch auf weiter innen gelegene Schichten aus, da diese Art der Oxidierung nach Zerstörung der ersten Seitenwand auch auf die darunter liegende Wand übergreift und auch diese schädigt. So ist dadurch an stark fehlerbehafteten Bereichen der CNT eine unkontrollierte Zerstörung der CNT bis hin zum Brechen der Röhre an dieser Stelle möglich.

An diesen oxidierten Stellen, die im Wesentlichen aus Carboxylgruppen bestehen, werden dann über einen weiteren mehrstufigen Prozess über Substitution der Carboxylgruppen mit einer Halogenverbindung, beispielsweise Thionylchlorid, reaktive Zentren geschaffen, an welchen weiterführende funktionelle Endgruppen angebracht werden können.

Die für MWCNT verwendeten Routen sind oft mit sehr ätzenden Reagenzien, zum Beispiel Thionylchlorid, und nur mit großem apparativem Aufwand, beispielsweise Schutzgas und entsprechend der Toxizität der Reagenzien notwendigen zusätzlichen Arbeitsschutzmaßnahmen, durchführbar.

Reaktionsrouten, die direkt die Seitenwand funktionalisieren können, ohne die Seitenwand vollständig zu zerstören, und die ohne hochgiftige Reagenzien und aufwendige Apparaturen auskommen, sind derzeit ausschließlich für SWCNT in Untersuchung.

Ausgehend vom genannten Stand der Technik liegt der vorliegenden Erfindung die Aufgabe zugrunde, ein Verfahren zum Herstellen von seitenwandfunktionalisierten, mehrwandigen Kohlenstoff-Nanoröhren bereitzustellen, bei dem die vorgenannten Nachteile vermieden werden können.

Diese Aufgabe wird erfindungsgemäß gelöst durch das Verfahren mit den Merkmalen gemäß dem unabhängigen Patentanspruch 1. Weitere Merkmale und Details der Erfindung ergeben sich aus den Unteransprüchen, der Beschreibung sowie den Zeichnungen.

Die vorliegende Erfindung ermöglicht insbesondere eine - insbesondere direkte - kovalente Seitenwandfunktionalisierung von mehrwandigen Kohlenstoff-Nanoröhren.

Gemäß der vorliegenden Erfindung werden insbesondere Methoden zur Erzeugung von kovalent an die Seitenwand eines MWCNT angebrachten Molekülen beschrieben, die mit ausgewählten funktionellen Endgruppen versehen werden können, ohne die Seitenwand zu zerstören. Die Erfindung betrifft somit insbesondere eine kovalente Seitenwandfunktionalisierung von mehrwandigen Kohlenstoff-Nanoröhren (Carbon-Nanotubes - CNT).

Gemäß Patentanspruch 1 wird erfindungsgemäß ein Verfahren zur Seitenwandfunktionalisierung von mehrwandigen Kohlenstoff-Nanoröhren bereitgestellt, das dadurch gekennzeichnet ist, dass an der Oberfläche des Materials wenigstens ein Molekül angebunden wird, welches endständig eine reaktive Gruppe aufweist, wobei die Anbindung mittels einer Diazotierungsreaktion in einem Lösungsmittel mit einem Dispergierhilfsmittel erfolgt. Bei dieser Gruppe handelt es sich insbesondere um die vorstehend genannte funktionelle Endgruppe.

Kohlenstoff-Nanomaterialien und Kohlenstoff-Mikromaterialien sind insbesondere mikroskopisch kleine Gebilde auf Kohlenstoffbasis, beispielsweise aus Kohlenstoff. Die Größe von Kohlenstoff-Nanomaterialien liegt dabei insbesondere im Nanometerbereich, während die Größe von Kohlenstoff-Mikromaterialien insbesondere im Mikrometerbereich liegt.

Erfindungsgemäß werden die MWCNT mit einem - insbesondere kovalent - an die Oberfläche angebundenem Molekül versehen, wobei das Molekül, endständig eine reaktive Gruppe, beispielsweise eine funktionelle Gruppe beziehungsweise Endgruppe, hat. "Reaktiv" bedeutet dabei insbesondere reaktionsfähig. Bei einer "funktionellen Gruppe" handelt es sich insbesondere um eine Gruppe, die die Stoffeigenschaften und/oder das Reaktionsverhalten der sie tragenden Verbindungen bestimmt.

Die kovalente Seitenwandfunktionalisierung von MWCNT, insbesondere mit Diaminen, zur Erzeugung von endständigen primären Aminogruppen an der Oberfläche der CNT-Seitenwand, kann auf verschiedenen Wegen erfolgen. Nachfolgend wird ein bevorzugter Weg beschrieben.

Erfindungsgemäß erfolgt die Anbindung mittels einer Diazotierungsreaktion. Dabei wird das Molekül über eine Diazotierungsreaktion an die CNT-Oberfläche angebunden. In diesem Fall wird die Funktionalisierung beispielsweise durch eine an die schwierigen Bedingungen von Reaktionen mit MWCNT angepasste Diazotierung der Seitenwand erreicht.

Nachfolgend wird der Weg einer Diazotierungsreaktion beispielhaft in größerem Detail beschrieben.

Vorzugsweise werden für die Diazotierung, insbesondere gereinigte, MWCNT trocken oder als Dispersion, beispielsweise mit einem Amin und Natriumnitrit oder Isoamylnitrit, vorgelegt. Als Lösungsmittel der Dispersionen können Wasser oder verschiedene organische Lösemittel wie Methanol, Ethanol, Butanol, Toluol, DMF, THF oder dergleichen, verwendet werden. Zur besseren Dispergierung wird der Dispersion ein Dispergierhilfsmittel zugegeben, beispielsweise ein beliebiges tensidisch wirkendes Dispergierhilfsmittel mit einen anionischen, nicht-ionischen oder kationischen Charakter, zum Beispiel Triton X 100, SDS, PEI oder Ähnliches. Das Dispergierhilfsmittel wird je nach Art des verwendeten Lösemittels in Art und Konzentration ausgesucht. Die Konzentration der CNT im Lösungsmittel kann vorteilhaft zwischen 0,001 und 10 Gewichtprozent betragen. Wichtig ist nur eine ausreichend gute Vereinzelung der CNT in der Dispersion bei gleichzeitig niedriger Viskosität der Dispersion, beispielsweise 10 mPa·s bis 1 Pa·s, um ein Rühren der Dispersion zu erleichtern.

Im Anschluss kann die Reaktionsmischung mit Schutzgas, beispielsweise CO₂, N₂, Ar, He, Ne gespült und bei einer geeigneten Temperatur, beispielsweise zwischen 0° C und 50° C, unter kräftigem Rühren mit einer Mineralsäure, beispielsweise HCl, H₂SO₄, HNO₃, H₃PO₄, versetzt werden. Die beschriebene Diazotierung wird bevorzugt mit oben genannten Schutzgasen durchgeführt, kann aber auch ohne vorherige Entfernung des Sauerstoffs erfolgreich durchgeführt werden. Die Mineralsäure muss bei der gewählten Temperatur im flüssigen Aggregatzustand vorliegen. Die Konzentration der Mineralsäure wird vorteilhaft so gewählt, dass der pH-Wert der Reaktionslösung zwischen pH=1 und pH= 6,5 liegt.

Die Reaktionsmischung wird anschließend, vorteilhaft zwischen 10 Minuten und 600 Minuten, gerührt und kann anschließend auf eine geeignete Temperatur, beispielsweise zwischen 0 °C und 30 °C, abgekühlt werden.

Das Reaktionsprodukt wird vorteilhaft mit viel reinem Lösemittel, wie beispielsweise Methanol, Ethanol, Butanol, Toluol, DMF, THF und/oder Wasser gewaschen und anschließend getrocknet.

Nachfolgend wird ein Ausführungsbeispiel zu der Diazotierung beschrieben.

Gemäß diesem Beispiel werden für die Diazotierung gereinigte MWCNT trocken und p-Phenylendiamine und Natriumnitrit als Dispersion vorgelegt. Als Lösungsmittel der Dispersionen wird DMF verwendet und als Dispergierhilfe 0,5 Gewichtprozent Triton X 100 zugegeben. Die Konzentration der CNT im Lösungsmittel beträgt 0,01 Gewichtprozent. Im Anschluss wird die Reaktionsmischung mit CO₂ gespült und bei 10 °C, unter kräftigem Rühren mit konzentrierter HCl versetzt. Die Mineralsäure muss bei der gewählten Temperatur im flüssigen Aggregatzustand vorliegen. Die Reaktionsmischung wird anschließend 30 min bei 50 °C gerührt und auf Raumtemperatur (RT) abgekühlt. Das Reaktionsprodukt wird mit viel Ethanol gewaschen und getrocknet.

In der folgenden Tabelle 1 wird eine Auswahl verschiedener möglicher Reaktionspartner für diesen Weg genannt.

| | |
|---|---|
| p-Phenylendiamin | 4-Nitroanilin |
| 4-Chloranilin | 4-Bromanilin |
| Adipinsäuredihydrazid | 4-Aminobenzamid |
| 4-Aminoazobenzol | 4-Aminobenzonitril |
| 4-Aminopyridin | Benzylamin |
| 4-Aminobenzoesäure | 4-Hydroxyanilin |

Nachfolgend wird ein Weg einer Kondensierung mittels einer Kondensationsreaktion (nicht erfindungsgemäß) beispielhaft in größerem Detail beschrieben.

Für die Kondensationsreaktion werden vorteilhaft halogenierte, beispielsweise mit F, Cl, Br oder J, MWCNT mit verschiedenen, vorzugsweise aliphatischen, Diaminen, vorzugsweise mit einer Kohlenstoffkettenlänge zwischen 2 und 10 Kohlenstoffatomen, beispielsweise in Wasser oder organischen Lösemitteln, beispielsweise Methanol, Ethanol, Butanol, Toluol, DMF, THF, dispergiert und vorzugsweise unter Ultraschallbehandlung bei geeigneten Temperaturen, vorteilhaft zwischen 20 °C und 120 °C, vorzugsweise mit Schutzgas, beispielsweise CO₂, N₂, Ar, He, Ne, gespült. Im Anschluss wird die Reaktionsmischung vorzugsweise auf eine geeignete Temperatur, beispielsweise zwischen 70 °C und 170 °C, erhitzt. Nach Erreichen der Reaktionstemperatur wird vorteilhaft Pyridin zugesetzt und über einen geeignet langen Zeitraum, beispielsweise zwischen 1 h und 10 h, gerührt. Im Anschluss daran wird das Reaktionsprodukt vorteilhaft auf eine geeignete Temperatur, beispielsweise zwischen 0°C und 30 °C, abgekühlt und vorteilhaft mit viel Lösemittel gewaschen.

Nachfolgend wird ein Ausführungsbeispiel zu der Kondensation beschrieben.

Gemäß diesem Beispiel werden gereinigte MWCNT trocken und 1,6-Diamonohexan in Toluol vorgelegt. Die Mischung wird zuerst mit einem schnelldrehenden Hochenergiemischgerät dispergiert und dann in einem Ultraschallbad mit Helium durchgespült. Danach wird die Dispersion auf 130°C aufgeheizt. Das Pyridin wird dazugegeben und die Mischung für 360 Minuten bei dieser Temperatur unter beständigem Rühren gehalten. Nach der Reaktionszeit wird die Dispersion auf 30 °C abgekühlt und abfiltriert und mit viel Butanol gewaschen. Im Anschluss wird das Pulver getrocknet.

Die Kondensation kann sowohl mit den oben genannten Substanzen als auch deren Derivaten, sowie Diaminoalkanen, -alkenen und alkinen mit einer C-Kettenlänge von 2-30 C-Atomen durchgeführt werden. Dabei führen aromatische Reaktionspartner wie p-Phenylendiamin, Alkene und Alkine zu eher steiferen funktionellen Gruppen, wodurch eine Anbindung an polymere Systeme weiter erleichtert wird, da die sterische Hinderung minimiert wird.

In der folgenden Tabelle 2 wird eine Auswahl verschiedener möglicher Reaktionspartner für diesen Weg einer Kondensierung genannt.

| | |
|---|---|
| 1,4-Diaminobutan | 1,5-Diaminopentan |
| 1,6-Diamonohexan | 1,10-Diaminodecan |
| 1,4-Diaminobut-2-en | 1,4-Diaminobut-2-in |

Die vorstehend beschriebene Diazotierungsreaktion musste an die besonderen Reaktionsbedingungen mit MWCNT angepasst werden. Wie weiter oben bereits beschrieben, sind SWCNT und MWCNT aufgrund ihrer unterschiedlich starken Pyramidalisierung des π-Systems nicht trivial miteinander vergleichbar, was bedeutet, dass die für SWCNT in Milligrammmaßstäben entwickelten Methoden nicht auf MWCNT oder gar auf Reaktionen mit MWCNT im technischen Maßstab übertragbar sind.

Da die bisherigen Methoden immer auf die Verwendung giftiger oder gesundheitsschädlicher Lösungsmittel wie Dichlorbenzol oder THF angewiesen waren, sind diese zusätzlich für eine Anwendung im technischen und großtechnischen Bereich zur Herstellung von funktionalisierten CNT im Tonnenbereich ungeeignet. Daher wurde bei der Entwicklung des erfindungsgemäßen Verfahrens sowohl auf einen möglichst einfachen, gefahrlosen Reaktionsweg, als auch auf eine umweltfreundliche Entsorgung der chemischen Abfälle und Lösungsmittel, sowie ein möglichst einfaches Upscaling geachtet.

Das erfindungsgemäße Verfahren wurde in Maßstäben von 50 mg bis zu 10 Gramm erfolgreich durchgeführt und bietet eine einfache Möglichkeit der kovalenten Seitenwandfunktionalisierung von MWCNT mit Diaminen und deren Derivaten zur Anbindung von endständigen funktionellen Amingruppen. Das erfindungsgemäße Verfahren eröffnet ein weites Feld an weiteren Funktionalisierungen und weist eine hohe Variabilität der funktionellen Gruppe und somit ein breites Spektrum an unterschiedlichen Anwendungen im Bereich der Komposite auf.

Dabei ist das erfindungsgemäße Verfahren selbst vorteilhaft einstufig und führt somit in Kombination mit der Aufreinigung in nur zwei Schritten zum gewünschten Reaktionsprodukt. Aufgrund dieser wenigen Arbeitsschritte ist das erfindungsgemäße Verfahren der herkömmlichen Methode überlegen, welche nach der Aufreinigung einen Carboxylierungsschritt, eine Säureaktivierung mit Thionylchlorid und ähnlichen Substanzen, gefolgt von einer Veresterung beziehungsweise Aminierung der Säuregruppe und der notwendigen Aufreinigung benötigt.

Somit ist das hier vorgestellte erfindungsgemäße Verfahren gegenüber der gängigen Methode kostengünstiger, weniger arbeitsintensiv und insbesondere umweltfreundlicher.

Weiterhin bietet das entwickelte erfindungsgemäße Verfahren insbesondere eine direkte Anbindung der funktionellen Gruppe an die Seitenwand der MWCNT ohne eine Schädigung der α-Bindungsstruktur. Durch die Bindungsbildung werden insbesondere die sp²-hybridisierten Kohlenstoffatome in eine sp³-Hybridisierung überführt. Daher ist das erfindungsgemäße Verfahren nicht auf Fehler in der Röhrenstruktur beziehungsweise auf ein Auflösen der σ-Bindungsstruktur der MWCNT angewiesen, wie es bei der herkömmlich verwendeten Carboxylierung der Fall ist.

Gemäß einer vorteilhaften Weiterbildung des erfindungsgemäßen Verfahrens kann die Anbindung des Moleküls somit an Kohlenstoff-Nanoröhren, insbesondere an gereinigten Kohlenstoff-Nanoröhren und/oder an vorfunktionalisierten Kohlenstoff-Nanoröhrchen, erfolgen. Insbesondere können die Reaktionen an gereinigten CNT und vorfunktionalisierten CNT, beispielsweise fluorierte CNT, durchgeführt werden.

Vorzugsweise ist das erfindungsgemäße Verfahren derart ausgebildet, dass alle in den Ansprüchen, der Beschreibung, den Beispielen, den Tabellen sowie den Zeichnungen genannten Edukte als Molekül und/oder als funktionelle Gruppe eingesetzt werden können.

Vorteilhaft kann das erfindungsgemäße Verfahren unter Bedingungen durchgeführt werden, die den Einsatz von organischen Lösemitteln ausschließen. Auf diese Weise wird ein besonders umweltschonendes und vom Blickpunkt des Arbeitsschutzes und der Verfahrenstechnologie sehr einfaches Verfahren ermöglicht.

Vorzugsweise kann das erfindungsgemäße Verfahren im Batchbetrieb durchgeführt werden. Alternativ kann das erfindungsgemäße Verfahren aber auch im kontinuierlichen Betrieb durchgeführt werden.

Vorteilhaft ist das erfindungsgemäße Verfahren derart ausgebildet, dass dieses eines oder mehrere in den Ansprüchen, der Beschreibung, den Beispielen, den Tabellen sowie den Zeichnungen genannte Merkmale aufweist.

Vorzugsweise kann die Anbindung der funktionellen Gruppe beziehungsweise Gruppe beziehungsweise reaktiven Gruppe ohne Schädigung oder Störung des σ-Bindungssystems erfolgen. Somit ermöglicht die vorliegende Erfindung eine kovalente Anbindung ohne Störung des σ-Bindungssystems.

Die Erfindung wird nun anhand von Ausführungsbeispielen unter Bezugnahme auf beiliegende Zeichnung näher erläutert. Es zeigen
- Figur 1: den Reaktionsweg einer kovalenten Funktionalisierung mittels Diazotierung; und
- Figur 2: den Reaktionsweg einer kovalenten Funktionalisierung mittels Kondensation (nicht erfindungsgemäß).

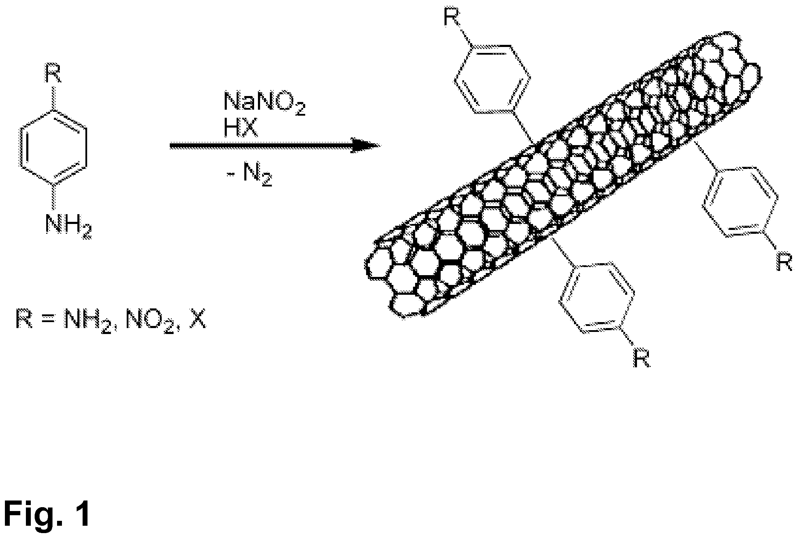

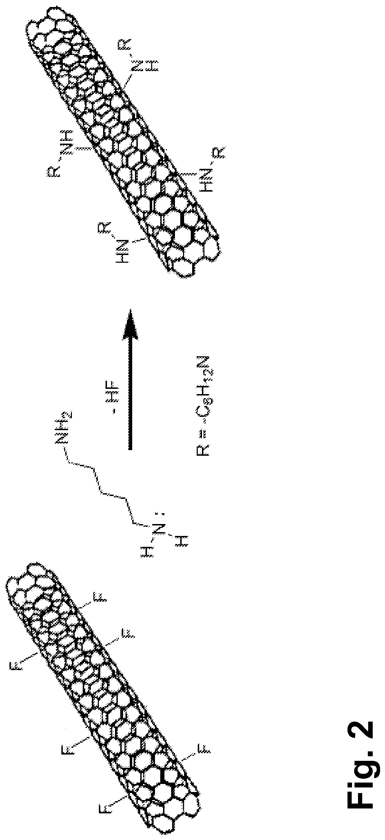

Die durch die weiter oben beschriebenen Verfahren entstehenden Produkte sind in den Figuren 1 und 2 schematisch dargestellt, um die Art der Bindung und die verschiedenen Möglichkeiten weiter zu verdeutlichen. Die weiter oben genannten Tabellen 1 und 2 führen verschiedene Diamine, wie verschiedenste Anilinderivate, Hydrazine, Diaminoalkane, -alken und -alkine, sowie Azofarbstoffe mit funktionellen Aminogruppen, Aminobezol- und Aminopyridinderivate auf, welche als Reaktionspartner in Frage kommen.

Figur 1 zeigt insbesondere den Reaktionsweg der kovalenten Aminfunktionalisierung mittels Diazotierung, mit X = Cl, Br. Figur 2 zeigt insbesondere den Reaktionsweg der kovalenten Aminfunktionalisierung mittels Kondensation (nicht erfindungsgemäß).

## Patentansprüche

1. Verfahren zur Seitenwandfunktionalisierung von mehrwandigen Kohlenstoff-Nanoröhren, **dadurch gekennzeichnet, dass** an der Oberfläche des Materials wenigstens ein Molekül angebunden wird, welches endständig eine reaktive Gruppe aufweist, wobei die Anbindung mittels einer Diazotierungsreaktion in einem Lösungsmittel mit einem Dispergierhilfsmittel erfolgt.

2. Verfahren nach Anspruch 1, **dadurch gekennzeichnet, dass** dieses unter Bedingungen durchgeführt wird, die den Einsatz von organischen Lösemitteln ausschließen.

3. Verfahren nach einem der Ansprüche 1 oder 2, **dadurch gekennzeichnet, dass** dieses im Batchbetrieb durchgeführt wird, oder dass dieses im kontinuierlichen Betrieb durchgeführt wird.

4. Verfahren nach einem der Ansprüche 1 bis 3, **dadurch gekennzeichnet, dass** die Anbindung der funktionellen Gruppe ohne eine Schädigung oder Störung des σ-Bindungssystems erfolgt.

## Claims

1. A method for sidewall functionalization of multi-wall carbon nanotubes, **characterized in that** at least one molecule that has a reactive group in a terminal position is bound to the surface of the material, wherein the binding is achieved by means of a diazotizing reaction in a solvent with a dispersing agent.

2. The method of claim 1, **characterized in that** the method is carried out under conditions that exclude the use of organic solvents.

3. The method of one of claims 1 or 2, **characterized in that** the method is carried out in batch operation or that the method is carried out in continuous operation.

4. The method of one of claims 1 to 3, **characterized in that** the binding of the functional group is achieved without damage or disruption of the σ-bond system.

## Revendications

1. Procédé pour la fonctionnalisation des parois latérales de nanotubes de carbone à parois multiples, **caractérisé en ce qu'**est fixée sur la surface du matériau au moins une molécule qui présente à l'extrémité un groupe réactif, tandis que la fixation s'effectue au moyen d'une réaction de diazotation dans un solvant avec un agent dispersant.

2. Procédé selon la revendication 1, **caractérisé en ce que** celui-ci est mis en oeuvre dans des conditions qui excluent l'introduction de solvants organiques.

3. Procédé selon l'une des revendications 1 ou 2, **caractérisé en ce que** celui-ci est mis en oeuvre par charges, ou **en ce que** celui-ci est mis en oeuvre en continu.

4. Procédé selon l'une des revendications 1 à 3, **caractérisé en ce que** la fixation du groupe fonctionnel s'effectue sans endommager ou sans perturber le système de liaison σ.
